# EUROPEAN PATENT SPECIFICATION

(11) **EP 3 477 598 B1**
(45) Date of publication and mention of the grant of the patent: **01.06.2022**
(21) Application number: 17425105.8
(22) Date of filing: 24.10.2017
(51) Int. Cl.: G07C 5/08, G07C 5/00, H04W 4/38, H04W 4/40

(54) **APPARATUS AND METHOD FOR AUTOMATICALLY MONITORING A VEHICLE**
VORRICHTUNG UND VERFAHREN ZUR AUTOMATISCHEN ÜBERWACHUNG EINES FAHRZEUGS
APPAREIL ET PROCÉDÉ DE SURVEILLANCE AUTOMATIQUE D'UN VÉHICULE

(43) Date of publication of application: 01.05.2019
(73) Proprietor: UNIPOLTECH S.P.A., 40128 Bologna (BO) (IT)
(72) Inventor: LOVATI, Giacomo Maria Saverio, Bologna 40131 (IT); CARREA, Paola, Alpignano (Torino) 10091 (IT); DE TOMMASI, Claudio, Grugliasco (Torino) 10095 (IT)
(74) Representative: Casadei, Barbara

(56) References cited:
- US-A1- 2002 103 622
- US-A1- 2010 023 201
- US-A1- 2013 030 642

## Description

This invention relates to an apparatus for automatically monitoring a vehicle and a method for automatically monitoring a vehicle, whereby the events correlated with the movement of the vehicle can be monitored remotely, automatically and precisely and the transfer of the data necessary for such monitoring can be optimized.

At present, monitoring systems exist which allow remotely monitoring the events correlated with the movements of a vehicle. In such systems, a local unit mounted on board the vehicle stores data obtained by sensors which operate on board the vehicle to monitor the events, as for example disclosed in US2010023201 A1.

When the local unit detects that an important event correlated with the movement of the vehicle may have occurred, such as an accident, for example, it sends the data measured to a remote unit which further processes the data to determine and thus assess the actual significance of the event, as for example disclosed in US2013030642 A1 or US2002103622 A1.

In many cases, events assessed as potentially significant by the local unit are in fact subsequently assessed as insignificant by the remote unit.

That means that large amounts of data transferred are very often useless which in turn raises costs and creates unnecessary peaks in data traffic.

The aim of this disclosure is to provide an apparatus and a method for automatically monitoring a vehicle to allow automatic remote monitoring of events correlated with the movement of the vehicle and, compared to prior art systems used for this purpose, reducing unnecessary data transfers, thereby making it possible to increase the amount of data transferred when the data are more significant and to minimize costs and data traffic in the case of insignificant events.

Another aim of this disclosure is to provide an apparatus and a method for automatically monitoring a vehicle to allow automatic remote monitoring of events correlated with the movement of the vehicle, by which it is possible to automatically vary the amount and types of data transferred as a whole for each potentially significant event as a function of the degree of significance of the event itself.

These aims, with reference to the apparatus, are achieved by an apparatus having the features which emerge from any one of the appended apparatus claims or from any combination of one or more of such apparatus claims.

These aims, with reference to the method, are achieved by a method having the features which emerge from any one of the appended method claims or from any combination of one or more of such method claims. The features of an apparatus according to this disclosure and of a method according to this disclosure will become clearer from the following detailed description of respective embodiments of the apparatus according to this disclosure and of the method according to this disclosure, given by way of non-limiting examples of the concepts claimed.

The following detailed description refers to the accompanying drawings, in which:
- Figure 1 is a block diagram of a possible example embodiment of a monitoring apparatus according to this disclosure and is explanatory of a first step of an example embodiment of a monitoring method according to this disclosure and carried out by this example embodiment of this apparatus;
- Figure 2 is the block diagram of Figure 1 and is explanatory of a second part of this example embodiment of this monitoring method;
- Figure 3 is the block diagram of Figure 1 and is explanatory of a third part of this example embodiment of this monitoring method;
- Figure 4 is the block diagram of Figure 1 and is explanatory of a fourth part of this example embodiment of this monitoring method;
- Figure 5 is a flow chart explanatory of a possible process whereby the first part and the second part of the monitoring method can be carried out;
- Figure 6 is a flow chart explanatory of a possible process whereby the third part and the fourth part of the monitoring method can be carried out;
- Figure 7 is explanatory of two possible different data packets used in this example embodiment of the monitoring method.

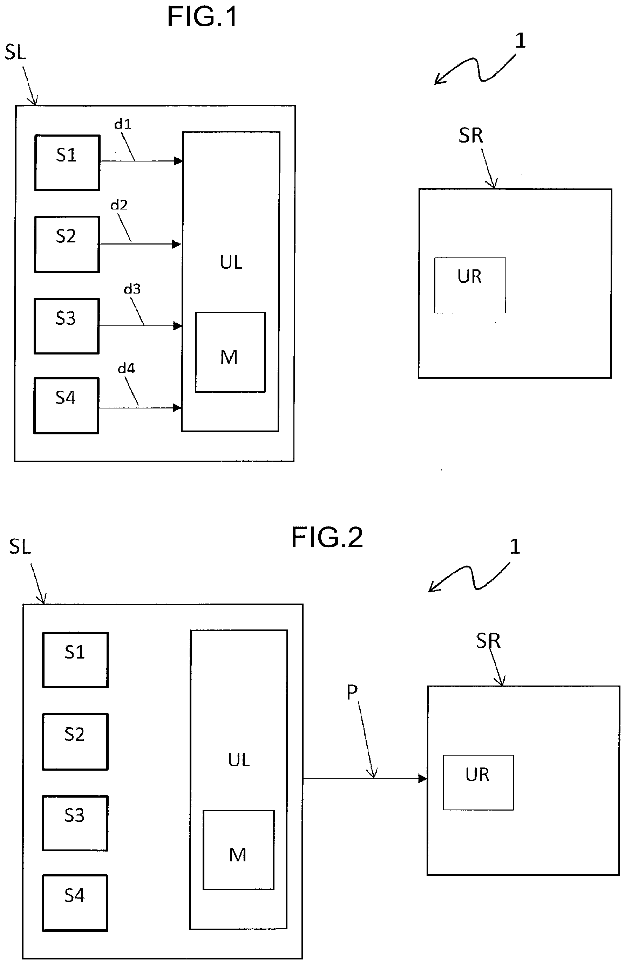

Figures 1 to 4 each show a block diagram of a possible example embodiment of an automatic monitoring apparatus according to this disclosure. The apparatus is denoted by the numeral 1.

According to this example embodiment of the apparatus, the apparatus 1 is configured to perform automatic monitoring of a vehicle. By monitoring is meant the monitoring of events which happen to the vehicle during movement of the vehicle. Such events should be considered as correlated with such movement, such as, for example, an accident.

The vehicle may be, for example, an automobile or any other type of vehicle capable of movement such as, for example, a lorry, a van, a coach or a truck. Such movement may be on a road or on any other type of surface.

According to this example embodiment of the apparatus, the apparatus 1 comprises a local measuring and processing system, represented as a block labelled SL.

The local measuring and processing system SL is configured to operate on board the vehicle while the vehicle is moving.

The local system SL is configured to send and/or transmit data and/or signals and/or to receive data and/or signals.

The local measuring and processing system SL may comprise at least one local processing unit, represented as a block labelled UL.

The local unit UL is configured to process data.

The local unit UL might comprise at least one piece of hardware and at least one piece of software that runs on that hardware.

The local unit UL might, for example, be a telematic unit. In this case, the local measuring and processing system SL may be considered a telematic system.

The local measuring and processing system SL may comprise one or more memories to store and/or save data. In Figures 1-4, one memory is represented by the block M. At least one of the one or more memories may be integrated in the local unit UL itself.

The local measuring and processing system SL comprises a group of sensors. Each of these sensors is configured to take readings correlated with the movement of the vehicle. These readings may, for example, be physical quantities measured or images captured.

At least one of these sensors may be a positioning sensor.

At least one of these sensors may be a speed sensor. The speed is to be considered as the speed of the vehicle. The speed may be a rotational (angular) speed of the vehicle or a translational speed of the vehicle.

At least one of these sensors may be an acceleration sensor. The acceleration is to be considered as the acceleration of the vehicle. The acceleration may be a translational acceleration of the vehicle or a rotational (angular) acceleration of the vehicle, meaning by rotational (angular) acceleration a time derivative of an angular speed.

At least one of these sensors may be an image sensor, such as a video camera or a photo camera.

It should be considered that for each specific sensor which takes readings of a specific physical quantity, such as, for example, a speed, position or acceleration sensor, reference may be made to a specific characteristic curve which represents or reproduces or is at least indicative of or is at least correlated with the change over time of that specific physical quantity as measured by that specific sensor. It should be considered that such specific sensor takes a reading of such specific physical quantity for each reading instant in a series of temporally successive reading instants. We may consider the points of the specific characteristic curve whose respective values along the x-axis correspond respectively to the reading instants. The value along the y-axis of each of these points may be considered as a data item indicative of the reading taken by the specific sensor at the reading instant corresponding to the value of the same point along the x-axis.

If the specific sensor is an image sensor, to be able to ideally consider a specific characteristic curve of that image sensor, the value along the y-axis of each of those points must, ideally, be replaced by the image captured by that specific image sensor at the reading instant corresponding to the value of the same point along the x-axis. We may consider as a first point of the characteristic curve a point whose value along the x-axis is a first reading instant, and as a second point of the characteristic curve a point whose value along the x-axis is a second reading instant. In this ideal schema, an image captured at that first reading instant is considered different from an image captured at that second reading instant if, according to that ideal schema, the value of the first point along the y-axis is different from the value of the second point along the y-axis.

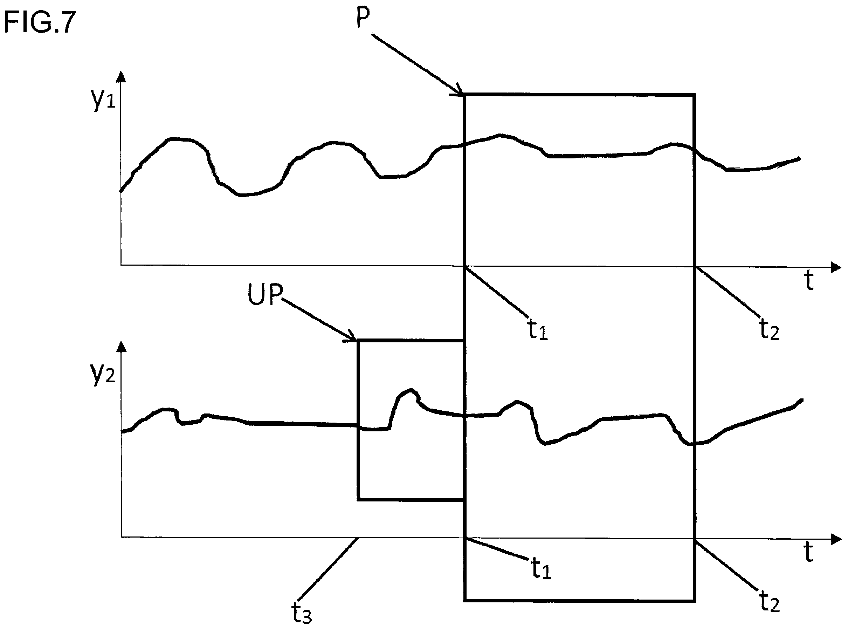

Figure 7 shows two graphs.

The first graph shows a function which represents a first characteristic curve. The first characteristic curve may be considered as a characteristic curve of a first sensor S1. This curve represents the change over time of a first physical quantity yi. This first physical quantity yi is measured by the first sensor S1. The function may be obtained, for example, by interpolating the data indicative of the readings taken by the first sensor S1.

The second graph shows a function which represents a second characteristic curve. The second characteristic curve may be considered as a characteristic curve of a second sensor S2. This curve represents the change over time of a second physical quantity y₂. This second physical quantity y₂ is measured by the second sensor S2. The function may be obtained, for example, by interpolating the data indicative of the readings taken by the second sensor S2.

The characteristic curve of the first sensor S1 is the one represented by the graph y₁-t.

The characteristic curve of the second sensor S2 is the one represented by the graph y₂-t.

Generally speaking, a specific part of the data which are indicative of the readings taken by the sensors of the local system SL can be considered correlated with one or more of these sensors and with at least one time window.

That means that specific part of the data comprises, or consists of, the data indicative of the readings which have been taken by the one or more sensors which that specific part is correlated with and which have been taken during the time window which that specific part is correlated with. Ideally, that means that specific part of the data, for each of the one or more sensors it is correlated with, comprises, or consists of, the values along the y-axis of the points which belong to the characteristic curve of each sensor and has respective values along the x-axis which fall into the time window which that specific part of the data is correlated with.

If one of the sensors that part is correlated with is a specific image sensor, that part for that image sensor comprises, or consists of, the images captured by that specific image sensor at the reading instants belonging to the time interval which that part is correlated with.

In the example shown in the accompanying drawings, that group of sensors comprises a first sensor S1, a second sensor S2, a third sensor S3 and a fourth sensor S4. The number of sensors might be different from that shown in the accompanying drawings.

According to this example embodiment of the apparatus, the apparatus 1 comprises a remote processing system, represented as a block labelled SR.

The remote processing system SR may comprise at least one remote processing unit, represented as a block labelled UR.

The remote unit UR is configured to process data.

The remote unit UR might comprise at least one piece of hardware and at least one piece of software that runs on that hardware.

The remote system SR is configured to send and/or transmit data and/or signals and/or to receive data and/or signals.

According to this example embodiment of the apparatus, the apparatus 1 comprises a communication system configured to allow transferring data and/or signals from the local system SL to the remote system SR and from the remote system SR to the local system SL.

The communication system might be a wireless system.

Through the group of sensors and the local unit SL, the local system SL is configured to obtain data indicative of the readings taken by the sensors. In Figure 1, the data indicative of the readings taken by the first sensor S1 are indicated by the arrow d1, the data indicative of the readings taken by the second sensor S2 are indicated by the arrow d2, the data indicative of the readings taken by the third sensor S3 are indicated by the arrow d3 and the data indicative of the readings taken by the fourth sensor S4 are indicated by the arrow d4. There may be any number of sensors, however, and each of the sensors may be of a different type.

The local unit UL is configured, at least through the local unit UL, to process at least part of the data indicative of the readings taken by the sensors in order to determine whether a potentially significant event has occurred to the vehicle.

This part of the data might, for example, be the part indicated by the box P in Figure 7.

The box labelled P in Figure 7 is an example of the part of the data processed by the local system SL. In the example of Figure 7, that part P of the data comprises the data indicative of the readings taken by the first sensor S1 in the time window which starts at t₁ and ends at t₂, and the data indicative of the readings taken by the second sensor S2 in the same time window which starts at t₁ and ends at t_{2.}

In the example of Figure 7, that part P of data is thus correlated with the time window which starts at t₁ and ends at t₂, and is correlated with the first sensor S1 and with the second sensor S2.

The fact that the box labelled P contains the part of the characteristic curve of the first sensor S1 from the instant t₁ to the instant t₂ means that part P, by way of example, comprises the data indicative of the readings taken by the first sensor S1 during the time window from t₁ to t₂.

The fact that the box labelled P contains the part of the characteristic curve of the second sensor S2 from the instant t₁ to the instant t₂ means that part P, by way of example, comprises the data indicative of the readings taken by the second sensor S2 during the time window from t₁ to t2.

It follows from what is stated above that if the second sensor S2 is, for example, an image sensor, the fact that the box labelled P contains the part of the characteristic curve of the second sensor S2 from the instant t₁ to the instant t₂ means that part comprises the images captured by the second sensor S2 during the time window from t₁ to t₂.

Through the local unit UL, the apparatus 1 is configured in such way that if the potentially significant event has occurred, the at least one part P of the data, on the basis of whose processing the local system SL has determined that a potentially significant event has occurred, is transferred through the aforementioned communication system from the local system SL to the remote system SR.

In Figure 2, the part P of the data, on the basis of whose processing the local system SL has determined that a potentially significant event has occurred, is represented by the arrow P, which indicates transfer of that part P of data from the local system SL to the remote system SR. Through the remote unit UR, the remote system SR is configured to process the part P of the data, on the basis of whose processing the local system SL has determined that a potentially significant event has occurred, in order to determine a degree of significance of the event.

The remote system SR is configured to select a further part of the data to be requested from the local system SL as a function of that degree of significance. Such further part is to be considered additional to, or different from the part on the basis of whose processing the local system SL has determined that a potentially significant event has occurred.

The box labelled UP in Figure 7 is an example of the further part of the data. In the example of Figure 7, that further part UP of the data comprises the data indicative of the readings taken by the second sensor S2 in the time window which starts at t₃ and ends at t₁.

In the example of Figure 7, the further part UP of data is thus correlated with the time window which starts at t₃ and ends at t₁, and is correlated with the second sensor S2.

The fact that the box labelled UP contains the part of the characteristic curve of the second sensor S2 from the instant t₃ to the instant t₁ means that further part UP, by way of example, comprises the data indicative of the readings taken by the second sensor S2 during the time window from t₃ to t₁.

It follows from what is stated above that if the second sensor S2 is, for example, an image sensor, the fact that the box labelled UP contains the part of the characteristic curve of the second sensor S2 from the instant t₃ to the instant t₁ means that further part UP comprises the images captured by the second sensor S2 during the time window from t₃ to t₁.

Selecting that further part UP of the data is to be understood as selecting the time window which the further part UP of the data must be correlated with and/or as selecting the one or more sensors which the further part UP of the data must be correlated with.

In the case where, for example, the remote system SR selects the further part UP of Figure 7, the selected window would be the window t₃-t₁ and at least one of the selected sensors would be the second sensor S2, whose characteristic curve is that represented on the graph y₂-t.

Through the local unit UL, the remote system SR is configured in such a way that selection of the further part UP of the data is carried out as a function of the degree of significance determined.

In that sense, the further part UP of the data can be correlated with at least one sensor which the part P of the data, on the basis of whose processing the local system SL had determined that a potentially significant event had occurred, was not correlated with.

The further part UP of the data could in any case be correlated with at least one sensor which the part P of the data, on the basis of whose processing the local system SL had determined that a potentially significant event had occurred, was also correlated with.

The further part UP of the data can be correlated with at least one time window which the part of the data, on the basis of whose processing the local system SL had determined that a potentially significant event had occurred, was not correlated with.

The further part UP of the data could in any case be correlated with at least one time window which the part P of the data, on the basis of whose processing the local system SL had determined that a potentially significant event had occurred, was also correlated with.

Through the communication system, the apparatus 1 is configured in such a way that the remote system SR can request the local system SL to send the further part UP of the data.

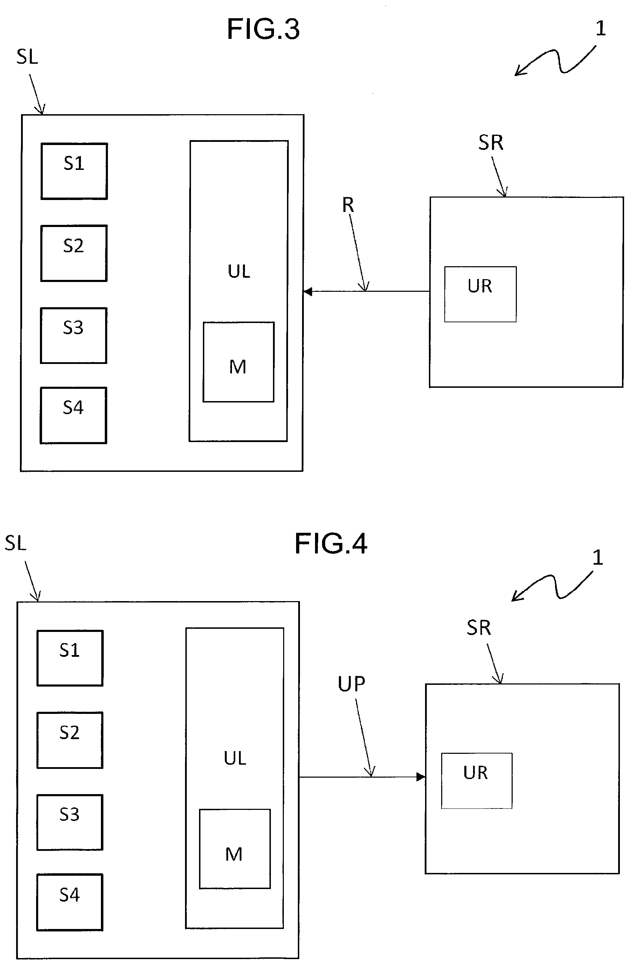

In Figure 3, the request for the further part UP of the data is represented by the arrow R which indicates the transfer of at least one signal or at least one data item indicative of the request.

Through the communication system, the apparatus 1 is configured in such a way that, following the request made by the remote system SR to the local system SL, the further part UP of the data is transferred from the local system SL to the remote system SR.

In Figure 4, the further part UP of the data is represented by the arrow P, which indicates transfer of the further part UP of data from the local system SL to the remote system SR.

In the example of Figure 7, even if the further part UP of the data is correlated with a sensor S2 which the part P of the data, on the basis of whose processing the local system SL had determined that a potentially significant event had occurred, was also correlated with, that further part UP is correlated with a time window [t₃, t₁] which the part P of the data, on the basis of whose processing the local system SL had determined that a potentially significant event had occurred, was not correlated with.

An example embodiment of a method according to this disclosure comprises taking the aforementioned readings correlated with the movement of the vehicle. The readings are taken, for example, by the aforementioned local measuring and processing system SL operating on board the vehicle while the vehicle is moving and comprising a group of sensors.

This example embodiment of the method comprises obtaining, for example through the aforementioned local system SL, the aforementioned data indicative of the readings.

This example embodiment of the method comprises processing, through the local system, SL, the aforementioned at least part P of the data, so as to determine whether a potentially significant event has occurred to the vehicle.

This example embodiment of the method comprises transferring that part P of the data from the local system SL to the aforementioned remote processing system if the potentially significant event has been determined to have occurred.

This example embodiment of the method comprises processing, through the remote system SR, the at least one part P of the data, so as to determine a degree of significance of the event.

This example embodiment of the method comprises selecting the aforementioned further part UP of the data to be requested from the local system SL through the remote system SR and as a function of that degree of significance.

This example embodiment of the method comprises requesting the further part UP of the data from the local system SL through the remote system SR and as a function of that degree of significance.

This example embodiment of the method comprises transferring the further part UP of the data from the local system SL to the remote system SR.

The following features refer to a possible, more specific example of an apparatus 1 according to this disclosure and to a possible, more specific example of a method according to this disclosure.

This more specific example of the apparatus may have one or more of the features described above with reference to the aforementioned example embodiment of the apparatus.

This more specific example of the method may have one or more of the features described above with reference to the aforementioned example embodiment of the method.

In the description which follows, any part of the data may be considered as a data "packet".

In this specific example of an apparatus according to this disclosure, the local system SL is configured to carry out at least one step of obtaining. In this specific example of an apparatus according to this disclosure, the local system SL is configured to carry out at least one step of storing. In this specific example of an apparatus according to this disclosure, the local system SL is configured to carry out at least one step of processing. In this specific example of an apparatus according to this disclosure, the local system SL is configured to carry out at least one step of determining. In this specific example of an apparatus according to this disclosure, the apparatus 1 is configured to carry out at least one step of transferring.

In this specific example of an apparatus according to this disclosure, the local unit UL is configured and/or programmed to carry out the at least one step of obtaining. In this specific example of an apparatus according to this disclosure, the local unit UL is configured and/or programmed to carry out the at least one step of storing. In this specific example of an apparatus according to this disclosure, the local unit UL is configured and/or programmed to carry out the at least one step of processing. In this specific example of an apparatus according to this disclosure, the local unit UL is configured and/or programmed to carry out the at least one step of determining. In this specific example of an apparatus according to this disclosure, the local system SL is configured to cause the at least one step of transferring. In this specific example of an apparatus according to this disclosure, the aforementioned communication system is configured to carry out the at least one step of transferring.

During the step of obtaining, the local system SL obtains a plurality of data packets. Each of these data packets is correlated with respective one or more sensors and with a respective time window. That means each of these data packets comprises the data indicative of the readings taken by the one or more sensors which that specific data packet is correlated with and during the time window which that specific data packet is correlated with.

During the step of storing, the local system SL stores the plurality of data packets in one or more memories M.

For example, the plurality of data packets may be considered as comprising the data packet corresponding to the part P of Figure 7 and the data packet corresponding to the further part UP of Figure 7.

One of the memories might, for example, be a circular buffer. One of the memories might, for example, be a flash memory.

During the step of processing, the local system SL processes at least one data packet of the plurality of data packets.

The at least one data packet might, for example, correspond to the part labelled P in Figure 7.

In the example of Figure 7, the at least one data packet P is thus correlated with the first sensor S1, whose characteristic curve is represented on the graph yi- t, with the second sensor S2, whose characteristic curve is represented on the graph y₂- t, and with the time window t₁-t₂.

Once the data packet P has been processed by the local system SL, that data packet may be considered as a "data packet processed by the local system SL".

During the step of determining, the local system SL determines, as a function of the step of processing, whether a potentially significant event has occurred to the vehicle.

The step of determining is a function of the step of processing in the sense that determining whether a potentially significant event has occurred to the vehicle depends on the step of processing. The fact that the local system SL determines that a potentially significant event has occurred means that the local system SL, based on the results of that step of processing and, for example, with at least a certain degree of likelihood, determines that a significant event involving the vehicle on which the local system SL is operating might have occurred. The significant even might, for example, be a vehicle accident.

The apparatus 1 is configured in such a way that the step of transferring is carried out if, during that step of determining, it was determined that the potentially significant event has occurred. During the step of transferring, the data packet P processed by the local system SL is transferred from the local system SL to the remote system SR.

During the step of transferring, the data packet P processed by the local system SL is sent by the local system SL and received by the remote system SR through the communication system.

In Figure 2, the step of transferring is represented by the arrow P which indicates transfer of the data packet P.

Once the data packet P processed by the local system SL has been transferred from the local system SL to the remote system SR, that data packet P processed by the local system SL may be considered as a "transferred data packet".

The transferred data packet P may be considered as being associated with the potentially significant event.

In the aforementioned specific example of a method according to this disclosure, the method comprises the at least on step of obtaining, the at least one step of storing, the at least one step of processing, the at least one step of determining and the at least one step of transferring.

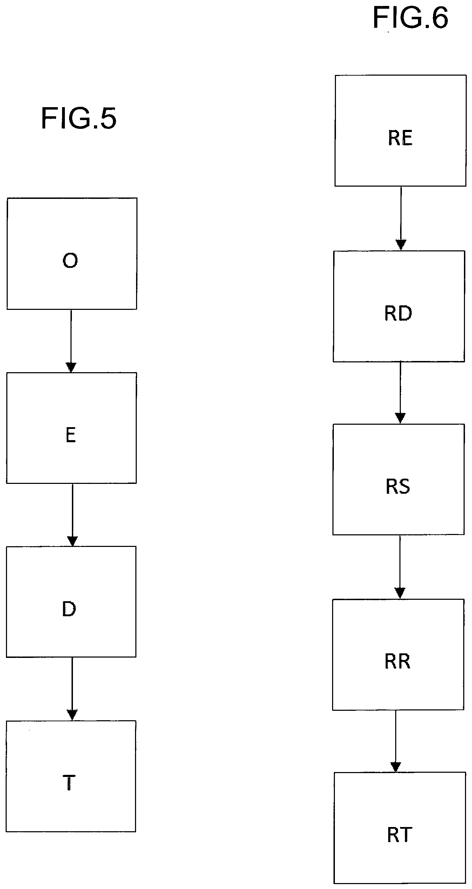

In Figure 5, the step of obtaining is represented by the block "O". In Figure 5, the step of processing is represented by the block "E". In Figure 5, the step of determining is represented by the block "D". In Figure 5, the step of transferring is represented by the block "T".

In the aforementioned specific example of an apparatus according to this disclosure, the apparatus 1 is configured to carry out a respective operating sequence for each data packet transferred from the local system SL to the remote system SR.

Such respective operating sequence can be considered as being associated with the respective transferred data packet. Such respective operating sequence can be considered as being associated with a specific event which the respective transferred data packet is associated with. Such respective operating sequence comprises a respective step of processing. Such respective operating sequence comprises a respective step of determining. Such respective operating sequence comprises a respective step of selecting. Such respective operating sequence comprises a respective step of requesting. Such respective operating sequence comprises a respective step of transferring.

In this specific example of an apparatus according to this disclosure, the remote system SR is configured to carry out the respective step of processing. In this specific example of an apparatus according to this disclosure, the remote system SR is configured to carry out the respective step of determining. In this specific example of an apparatus according to this disclosure, the remote system SR is configured to carry out the respective step of selecting. In this specific example of an apparatus according to this disclosure, the apparatus 1 is configured to carry out the respective step of requesting. In this specific example of an apparatus according to this disclosure, the apparatus 1 is configured to carry out the respective step of transferring.

In this specific example of an apparatus according to this disclosure, the remote unit UR is configured and/or programmed to carry out the respective step of processing. In this specific example of an apparatus according to this disclosure, the remote unit UR is configured and/or programmed to carry out the respective step of determining. In this specific example of an apparatus according to this disclosure, the remote unit UR is configured and/or programmed to carry out the respective step of selecting. In this specific example of an apparatus according to this disclosure, the remote system SR is configured to cause the respective step of requesting. In this specific example of an apparatus according to this disclosure, the communication system is configured to carry out the respective step of requesting. In this specific example of an apparatus according to this disclosure, the local system SL is configured to cause the respective step of transferring. In this specific example of an apparatus according to this disclosure, the communication system is configured to carry out the respective step of transferring.

During the respective step of processing, the remote system SR processes the respective transferred data packet.

During the respective step of determining, the remote system SR determines, as a function of the respective step of processing carried out by the remote system SR, a respective degree of significance of the specific event which the respective transferred data packet is associated with.

The step of determining the respective degree of significance may be considered as an at least partial reconstruction of the nature of the specific event. The expression "nature of the specific event" is used to mean the capturing and/or reconstruction of one or more features of the specific event.

During the respective step of selecting, the remote system SR selects a respective further data packet to be requested from the local system SL as a function of the respective degree of significance.

The respective further data packet is a function of the respective degree of significance in that the remote system SR selects that respective further data packet as a function of that respective degree of significance.

The respective further data packet might, for example, correspond to the part labelled UP in Figure 7.

During the respective step of selecting, the remote system SR selects, as a function of the respective degree of significance, at least one respective time window which that respective further data packet UP must be correlated with, so that, as a function of that respective degree of significance, that respective selected time window may be the same as, or different from, the time window which the respective transferred data packet is correlated with.

The respective selected time window is a function of the respective degree of significance in that the remote system SR selects that respective time window as a function of that respective degree of significance.

During the respective step of selecting, the remote system SR selects, as a function of the respective degree of significance, at least one respective sensor which that respective further data packet UP must be correlated with, so that, as a function of that respective degree of significance, that respective at least one sensor may be either the same as one of the one or more sensors which the respective transferred data packet is correlated with, or different from all of the one or more sensors which the respective transferred data packet is correlated with.

The respective at least one selected sensor is a function of the respective degree of significance in that the remote system SR selects that respective at least one sensor as a function of that respective degree of significance.

Selecting that respective further data packet corresponds to, and/or comprises, and/or occurs by means of, the selecting of the respective time window and of the respective at least one sensor.

In the case where, for example, the remote system SR selects as the respective further data packet, the further part UP of Figure 7, the selected window would be the window t₃-t₁ and at least one of the selected sensors would be the second sensor S2, whose characteristic curve is that represented on the graph y₂-t.

During the respective step of requesting, the remote system SR requests the local system SL to send that respective further data packet UP to the remote system SR.

During the respective step of requesting, a request for the respective further data packet UP is sent by the remote system SR and received by the local system SL through the communication system.

In Figure 3, the respective step of requesting is represented by the arrow R, which indicates transfer of that request from the remote system SR to the local system SL.

During the respective step of transferring, the respective further data packet UP is transferred from the local system SL to the remote system SR.

In Figure 4, the step of transferring is represented by the arrow UP which indicates transfer of the respective further data packet UP.

During the respective step of transferring, the respective further data packet UP is sent by the local system SL and received by the remote system SR through the communication system.

Once the respective further data packet UP has been transferred from the local system SL to the remote system SR, that respective further data packet UP may also be considered as a "transferred data packet".

Thus, the apparatus 1 is configured to carry out the above operating sequence for that respective further data packet UP, too.

Thus, the operating sequence carried out for that respective further transferred data packet UP may be considered as being associated with that respective further transferred data packet UP, just like the operating sequence carried out previously was associated with the respective transferred data packet P.

The respective further transferred data packet UP may also be considered as being associated with the same aforementioned specific event.

Thus, the operating sequence carried out for that respective further transferred data packet UP may also be considered as being associated with the same aforementioned specific event.

During the step of determining belonging to the operating sequence associated with that respective further transferred data packet UP, the degree of significance of the specific event is determined again, so as to update it.

In this specific example of an apparatus according to this disclosure, the apparatus 1 is thus configured in such a way that the above operating sequence is repeated until the remote system SR determines a final degree of significance for that specific event. The final degree of significance is a degree of significance considered sufficiently reliable by the remote system SR. The determining of that final degree of significance might correspond to the fact that the remote system SR considers that it does not need any more data packets to reconstruct the nature of the specific event because the remote system SR itself has assessed that the specific event has already been reconstructed to a sufficient level of reliability for the monitoring purposes of the apparatus 1. The final degree of significance might also indicate that the event is in fact not significant. That way, if the event is not significant, there is no need for further data transfers, thereby avoiding the unnecessary costs and/or traffic that would be associated with such data transfers. The remote system SR might, in some cases, immediately consider the specific event to be not significant and thus might not even make a request for any other data packet associated with that event, which had initially been considered potentially significant by the local system SL.

In the aforementioned specific example of a method according to this disclosure, the method comprises the aforementioned respective operating sequence for each data packet transferred from the local system SL to the remote system.

This operating sequence is represented in Figure 6. The respective step of processing is represented by the block "RE". The respective step of determining is represented by the block "RD". The respective step of selecting is represented by the block "RS". The respective step of requesting is represented by the block "RR". The respective step of transferring is represented by the block "RT".

The following case might occur, for example:
- the local system SL determines that a potentially significant event has occurred, based on the processing of a first data packet which comprises the data indicative of the readings taken by an accelerometer during a first time window;
- the remote system SR processes the first data packet and determines a degree of significance which confirms that the event is effectively significant;
- based on that degree of significance, the remote system SR requests a second data packet from the local system.

The second data packet might comprise the readings captured by a camera during the first time window or during a second time window different from the first time window.

Alternatively or additionally, the second data packet might also comprise the data indicative of the readings captured by the same accelerometer but in the second time window.

In a further example embodiment of an apparatus 1 according to this disclosure, the local system SL is a telematic system and the remote system SR operates in a server.

This further example embodiment of the apparatus may have one or more of the features described above with reference to the aforementioned specific example of the apparatus.

In this further example embodiment, the local unit UL is a telematic box.

In this further example embodiment, the local telematic system SL monitors a respective reduced data packet for each respective instant at which each of the sensors takes its reading and sends that reduced data packet to the server, where the remote system is operating, only when that respective reduced data packet indicates that a significant event correlated with the movement of the vehicle may have occurred.

The remote system on the server processes that respective reduced data packet and determines a degree of effective significance based on which it may request at least one further data packet or it may decide that the event was in fact not significant.

By not overloading the communication system with unnecessary data transfers between the local telematic system and the server, the apparatus allows considerable cost savings.

Indeed, the cost of transferring data through the aforementioned communication system may be relatively high, whilst the cost of storing the data in one or more memories of the local system is, instead, much lower. In practice, the remote system, based on the first processing of a first data packet received in connection with a potentially significant event, and on subsequent processing of data packets subsequently received following requests the remote system itself may make, progressively reconstructs the nature of the event which the first data packet referred to and progressively updates the degree of significance and hence the nature of that event. The nature of the event as reconstructed by the remote system SR is a piece of technical information which may be used for any purpose. The apparatus thus allows optimizing progressive transfer of data from the local system to the remote system as a function of the remote system's progressive reconstruction of the event based on successive data packets received by the remote system itself.

## Claims

1. An automatic monitoring apparatus (1) for automatically monitoring a road vehicle, comprising:
- a local measuring and processing system (SL) configured to operate on board the vehicle while the vehicle is moving, the local system (SL) comprising a group of sensors (S1, S2, S3, S4) for taking readings correlated with the movement;
- a remote processing system (SR);
wherein:
- the local system (SL) is configured to obtain data (d1, d2, d3, d4) indicative of these readings and to process at least one part of the data (d1, d2, d3, d4) in order to determine whether a potentially significant event has occurred to the vehicle;
wherein the local system (SL) is configured in such a way that:
- the local system (SL) carries out a step of obtaining (O), during which it obtains a plurality of data packets (P, UP), each of such data packets being correlated with respective one or more of the sensors and with a respective time window, in the sense that each of such data packets comprises the data which are indicative of the readings taken by the respective one or more sensors during the respective time window;
wherein the local system (SL) is configured in such a way that:
- the local system (SL) carries out a step of processing (E), during which the local system (SL) processes at least one data packet (P) of the plurality of data packets;
- the local system (SL) carries out a step of determining (D), during which the local system (SL) determines, as a function of the step of processing (E), whether a potentially significant event has occurred to the vehicle;
- if the step of determining (D) results in determining that the potentially significant event has occurred, the local system (SL) is configured to carry out a step of transferring (T) the processed data packet (P) from the local system (SL) to the remote system (SR);
**characterized in that**:
- the remote system (SR) is configured to process the at least one part (P) of the data, so as to determine a degree of effective significance of the event;
- the remote system (SR) is configured in such a way that, as a function of that degree of significance, the remote system (SR) can request the local system to send a further part (UP) of the data, such further part being additional to the part on the basis of which the local system (SL) has determined that the potentially significant event has occurred;
- the local system (SL) is configured in such a way that, following the request made by the remote system (SR) to the local system (SL), to transfer the further part of the data from the local system (SL) to the remote system (SR);
- the remote system (SR) is configured to select the further part (UP) of the data to be requested from the local system (SL) as a function of that degree of significance;
- the remote system (SR) is configured to carry out a respective step of processing (RE), during which the remote system (SR) processes the respective transferred data packet (P);
- the remote system (SR) is configured to carry out a respective step of determining (RD), during which the remote system determines, as a function of the respective step of processing (RE) a respective degree of significance of the specific event which has occurred to the vehicle and which the respective transferred data packet is associated with;
- the remote system (SR) configured to carry out a respective step of requesting (RR), during which the remote system (SR), as a function of the respective degree of significance, requests the local system (SL) to send to the remote system (SR) a respective further data packet (UP) of the plurality of data packets (P, UP), the respective further data packet (UP) being associated with the same specific event;
- the local system (SL) configured to carry out a respective step of transferring (RT) the respective further data packet (UP) from the local system (SL) to the remote system (SR);
- the remote system (SR) is configured in such a way that the remote system (SR) carries out a respective step of selecting (RS), during which the remote system (SR), as a function of the respective degree of significance, selects the respective further data packet (UP) to be requested from the local system (SL) during the respective step of requesting (RR);
- the remote system (SR) is configured in such a way that during the respective step of selecting (RS), the remote system (SR) selects, as a function of the respective degree of significance, at least one respective time window which the respective further data packet (UP) must be correlated with;
- the remote system (SR) is configured in such a way that during the respective step of selecting (RS), the remote system (SR) selects, as a function of the respective degree of significance, at least one respective sensor which the respective further data packet (UP) must be correlated with.

2. An automatic monitoring method for automatically monitoring a road vehicle, comprising:
- taking readings correlated with the movement of the vehicle by means of a local measuring and processing system (SL) operating on board the vehicle while the vehicle is moving and comprising a group of sensors (S1, S2, S3, S4);
- obtaining, through the local system (SL), data (d1, d2, d3, d4) indicative of these readings;
- processing at least one part (P) of the data through the local system (SL), so as to determine whether a potentially significant event has occurred to the vehicle;
- if the potentially significant event has been determined to have occurred, transferring that part (P) of the data from the local system (SL) to the remote processing system;
- a step of obtaining (O), during which a local system (SL) obtains a plurality of data packets (P, UP), each of such data packets being correlated with respective one or more of the sensors and with a respective time window, in the sense that each of such data packets comprises the data which are indicative of the readings taken by the respective one or more sensors during the respective time window;
- a step of processing (E), during which the local system (SL) processes at least one data packet (P) of the plurality of data packets;
- a step of determining (D), during which the local system (SL) determines, as a function of the step of processing (E), whether a potentially significant event has occurred to the vehicle;
- if the step of determining (D) results in determining that the potentially significant event has occurred, a step of transferring (T), during which the processed data packet (P) is transferred from the local system (SL) to a remote system (SR);
**characterized in that** the method comprises:
- processing, through the remote system (SR), the part (P) of the data, so as to determine a degree of significance of the event;
- requesting the local system (SL), through the remote system (SR) and as a function of that degree of significance, to send a further part (UP) of the data, such further part being additional to the part on the basis of which the local system (SL) has determined that the potentially significant event has occurred;
- transferring the further part (UP) of the data from the local system (SL) to the remote system (SR);
- a step of selecting, by means of the remote system (SR) and as a function of that degree of significance, the further part (UP) of the data to be requested from the local system (SL);
for each data packet (P) transferred from the local system (SL) to the remote system (SR), said transferred packet being associated with the potentially significant event, the method comprises a respective operating sequence, the respective operating sequence comprising:
- a respective step of processing (RE), during which the remote system (SR) processes the respective transferred data packet (P);
- a respective step of determining (RD), during which the remote system (SR) determines, as a function of the respective step of processing (RE) carried out by the remote system (SR), a respective degree of significance of the specific event which has occurred to the vehicle and which the respective transferred data packet is associated with;
- a respective step of requesting (RR), during which the remote system (SR), as a function of the respective degree of significance, requests the local system (SL) to send to the remote system (SR) a respective further data packet (UP) of the plurality of data packets, the respective further data packet (UP) being associated with the same specific event;
- a respective step of transferring (RT), during which the respective further data packet (UP) is transferred from the local system (SL) to the remote system (SR);
- the respective operating sequence comprises a respective step of selecting (RS), during which the remote system (SR), as a function of the respective degree of significance, selects the respective further data packet (UP) to be requested from the local system (SL) during the respective step of requesting (RR);
- during the respective step of selecting (RS), the remote system (SR) selects, as a function of the respective degree of significance, at least one respective time window which the respective further data packet (UP) must be correlated with;
- during the respective step of selecting (RS), the remote system (SR) selects, as a function of the respective degree of significance, at least one respective sensor which the respective further data packet (UP) must be correlated with.

3. The automatic monitoring method according to claim 2, wherein - during the respective step of selecting (RS), the remote system (SR) selects the at least one respective time window which that respective further data packet (UP) must be correlated with, so that, as a function of that respective degree of significance, the at least one respective selected time window may be different from, or the same as, the time window which the respective transferred data packet (P) is correlated with.

4. The automatic monitoring method according to claim 2 or 3, wherein during the respective step of selecting (RS), the remote system (SR) selects the at least one respective sensor which that respective further data packet (UP) must be correlated with, so that, as a function of that respective degree of significance, that respective at least one selected sensor may be either a sensor which is different from the one or more sensors which the respective transferred data packet (P) is correlated with, or a sensor which is the same as one of the one or more sensors which the respective transferred data packet (P) is correlated with.

## Patentansprüche

1. Automatische Überwachungsvorrichtung (1) zur automatischen Überwachung eines Straßenfahrzeugs, umfassend:
- ein lokales Mess- und Verarbeitungssystem (SL), das ausgelegt ist, um an Bord des Fahrzeugs zu arbeiten, während das Fahrzeug fährt, wobei das lokale System (SL) eine Gruppe von Sensoren (S1, S2, S3, S4) umfasst, um Messwerte, die mit der Fahrt korreliert sind, zu erfassen;
- ein Remote-Verarbeitungssystem (SR),
wobei
- das lokale System (SL) ausgelegt ist, um Daten (d1, d2, d3, d4) zu erhalten, die Aufschluss über diese Messwerte geben, und mindestens einen Teil der Daten (d1, d2, d3, d4) verarbeiten, um zu ermitteln, ob ein potenzielles signifikantes Ereignis bezüglich des Fahrzeugs eingetreten ist,
wobei das lokale System (SL) ausgelegt ist, sodass
- das lokale System (SL) einen Schritt zum Erhalten (O) durchführt, während dessen es eine Vielzahl von Datenpaketen (P, UP) erhält, wobei ein jedes dieser Datenpakete mit einem oder mehreren jeweiligen Sensoren und mit einem jeweiligen Zeitfenster korreliert ist, in dem Sinn, dass ein jedes der Datenpakete die Daten umfasst, die Aufschluss über Messwerte geben, die von dem jeweiligen einen oder mehreren Sensoren während des jeweiligen Zeitfensters erfasst werden,
wobei das lokale System (SL) ausgelegt ist, sodass
- das lokale System (SL) einen Schritt zum Verarbeiten (E) durchführt, während dessen das lokale System (SL) mindestens ein Datenpaket (P) der Vielzahl von Datenpaketen verarbeitet;
- das lokale System (SL) einen Schritt zum Ermitteln (D) durchführt, während dessen das lokale System (SL) als eine Funktion des Schritts zum Verarbeiten (E) ermittelt, ob ein potenzielles signifikantes Ereignis bezüglich des Fahrzeugs eingetreten ist;
- das lokale System (SL) ausgelegt ist, um einen Schritt zum Übertragen (T) des verarbeiteten Datenpakets (P) vom lokalen System (SL) an das Remote-System (SR) durchzuführen, wenn beim Schritt zum Ermitteln (D) ermittelt wird, dass das potenzielle signifikante Ereignis eingetreten ist,
**dadurch gekennzeichnet, dass**
- das Remote-System (SR) ausgelegt ist, um mindestens einen Teil (P) der Daten zu verarbeiten, sodass ein Grad einer tatsächlichen Bedeutung des Ereignisses ermittelt wird;
- das Remote-System (SR) so ausgelegt ist, dass das Remote-System (SR) als eine Funktion dieses Bedeutungsgrads das lokale System auffordern kann, einen weiteren Teil (UP) der Daten zu senden, wobei dieser weitere Teil den Teil ergänzt, auf dessen Grundlage das lokale System (SL) ermittelt hat, dass das potenziell signifikante Ereignis eingetreten ist;
- das lokale System (SL) so ausgelegt ist, dass es nach der Aufforderung durch das Remote-System (SR) an das lokale System (SL) den weiteren Teil der Daten vom lokalen System (SL) an das Remote-System (SR) überträgt;
- das Remote-System (SR) ausgelegt ist, um den weiteren Teil (UP) der vom lokalen System (SL) anzufordernden Daten als eine Funktion des Bedeutungsgrads auszuwählen;
- das Remote-System (SR) ausgelegt ist, um einen jeweiligen Verarbeitungsschritt (RE) auszuführen, während dessen das Remote-System (SR) das jeweilige übertragene Datenpaket (P) verarbeitet;
- das Remote-System (SR) ausgelegt ist, um einen jeweiligen Ermittlungsschritt (RD) auszuführen, während dessen das Remote-System als eine Funktion des jeweiligen Verarbeitungsschritts (RE) einen jeweiligen Bedeutungsgrad des spezifischen Ereignisses ermittelt, das bezüglich des Fahrzeugs eingetreten ist und mit dem das jeweilige übertragene Datenpaket assoziiert ist;
- das Remote-System (SR) ausgelegt ist, um einen jeweiligen Aufforderungsschritt (RR) durchzuführen, während dessen das Remote-System (SR) das lokale System (SL) als eine Funktion des jeweiligen Bedeutungsgrads auffordert, dem Remote-System (SR) ein jeweiliges weiteres Datenpaket (UP) der Vielzahl von Datenpaketen (P, UP) zu senden, wobei das jeweilige weitere Datenpaket (UP) mit demselben spezifischen Ereignis assoziiert ist;
- das lokale System (SL) ausgelegt ist, um einen Schritt zum Übertragen (RT) des jeweiligen weiteren Datenpakets (UP) vom lokalen System (SL) an das Remote-System (SR) durchzuführen;
- das Remote-System (SR) so ausgelegt ist, dass das Remote-System (SR) einen jeweiligen Auswahlschritt (RS) durchführt, während dessen das Remote-System (SR) das jeweilige weitere, vom lokalen System (SL) während des jeweiligen Aufforderungsschritts (RR) anzufordernde Datenpaket (UP) als eine Funktion des jeweiligen Bedeutungsgrads auswählt;
- das Remote-System (SR) so ausgelegt ist, dass das Remote-System (SR) während des jeweiligen Auswahlschritts (RS) als eine Funktion des jeweiligen Bedeutungsgrads mindestens ein jeweiliges Zeitfenster auswählt, mit dem das jeweilige weitere Datenpaket (UP) korreliert sein muss;
- das Remote-System (SR) so ausgelegt ist, dass das Remote-System (SR) während des jeweiligen Auswahlschritts (RS) als eine Funktion des jeweiligen Bedeutungsgrads mindestens einen jeweiligen Sensor auswählt, mit dem das jeweilige weitere Datenpaket (UP) korreliert sein muss.

2. Automatische Überwachungsvorrichtung zur automatischen Überwachung eines Straßenfahrzeugs, umfassend:
- Erfassen von Messwerten, die mit der Fahrt des Fahrzeugs korreliert sind, mittels eines lokalen Mess- und Verarbeitungssystems (SL), das an Bord des Fahrzeugs arbeitet, während das Fahrzeug fährt, umfassend eine Gruppe von Sensoren (S1, S2, S3, S4);
- Erhalten von Daten (d1, d2, d3, d4), die Aufschluss über diese Messwerte geben, durch das lokale System (SL);
- Verarbeiten von mindestens einem Teil der Daten durch das lokale System (SL), sodass ermittelt wird, ob ein potenzielles signifikantes Ereignis bezüglich des Fahrzeugs eingetreten ist;
- Übertragen dieses Teils (P) der Daten vom lokalen System (SL) an das Remote-Verarbeitungssystem, wenn ermittelt wurde, dass das potenziell signifikante Ereignis eingetreten ist;
- einen Schritt zum Erhalten (O), während dessen ein lokales System (SL) eine Vielzahl von Datenpaketen (P, UP) erhält, wobei ein jedes dieser Datenpakete mit einem oder mehreren jeweiligen Sensoren und mit einem jeweiligen Zeitfenster korreliert ist, in dem Sinn, dass ein jedes der Datenpakete die Daten umfasst, die Aufschluss über die von dem jeweiligen einen oder mehreren Sensoren während des jeweiligen Zeitfensters erfassten Messwerte geben;
- einen Schritt zum Verarbeiten (E), während dessen das lokale System (SL) mindestens ein Datenpaket (P) der Vielzahl von Datenpaketen verarbeitet;
- einen Schritt zum Ermitteln (D), während dessen das lokale System (SL) als eine Funktion des Schritts zum Verarbeiten (E) ermittelt, ob ein potenzielles signifikantes Ereignis bezüglich des Fahrzeugs eingetreten ist;
- einen Schritt zum Übertragen (T), während dessen das verarbeitete Datenpaket (P) vom lokalen System (SL) an ein Remote-System (SR) übertragen wird, wenn beim Schritt zum Ermitteln (D) ermittelt wird, dass das potenzielle signifikante Ereignis eingetreten ist, **dadurch gekennzeichnet, dass** das Verfahren Folgendes umfasst:
- Verarbeiten des Teils (P) der Daten durch das Remote-System (SR), sodass ein Bedeutungsgrad des Ereignisses ermittelt wird;
- Auffordern des lokalen Systems (SL) durch das Remote-System (SR) als eine Funktion dieses Bedeutungsgrads, um einen weiteren Teil (UP) der Daten zu senden, wobei dieser weitere Teil den Teil ergänzt, auf dessen Grundlage das lokale System (SL) ermittelt hat, dass das potenziell signifikante Ereignis eingetreten ist;
- Übertragen des weiteren Teils (UP) der Daten vom lokalen System (SL) an das Remote-System (SR);
- einen Schritt zum Auswählen des weiteren Teils (UP) der vom lokalen System (SL) anzufordernden Daten mittels des Remote-Systems (SR) und als eine Funktion dieses Bedeutungsgrads,
wobei das übertragene Paket für jedes vom lokalen System (SL) an das Remote-System (SR) übertragene Datenpaket (P) mit dem potenziellen signifikanten Ereignis korreliert ist, wobei das Verfahren eine jeweilige Betriebsabfolge umfasst, wobei die jeweilige Betriebsabfolge Folgendes umfasst:
- einen jeweiligen Verarbeitungsschritt (RE), während dessen das Remote-System (SR) das jeweilige übertragene Datenpaket (P) verarbeitet;
- einen jeweiligen Ermittlungsschritt (RD), während dessen das Remote-System (SR) als eine Funktion des jeweiligen, vom Remote-System (SR) durchgeführten Verarbeitungsschritts (RE) einen jeweiligen Bedeutungsgrad des spezifischen Ereignisses ermittelt, das bezüglich des Fahrzeugs eingetreten ist und mit dem das jeweilige übertragene Datenpaket assoziiert ist;
- einen jeweiligen Aufforderungsschritt (RR), während dessen das Remote-System (SR) das lokale System (SL) als eine Funktion des jeweiligen Bedeutungsgrads auffordert, dem Remote-System (SR) ein jeweiliges weiteres Datenpaket (UP) der Vielzahl von Datenpaketen (UP) zu senden, wobei das jeweilige weitere Datenpaket (UP) mit demselben spezifischen Ereignis assoziiert ist;
- einen Schritt zum Übertragen (RT), während dessen das jeweilige weitere Datenpaket (UP) vom lokalen System (SL) an das Remote-System (SR) übertragen wird,
wobei die jeweilige Betriebsabfolge einen jeweiligen Auswahlschritt (RS) umfasst, während dessen das Remote-System (SR) das jeweilige weitere, vom lokalen System (SL) während des jeweiligen Aufforderungsschritts (RR) anzufordernde Datenpaket (UP) als eine Funktion des jeweiligen Bedeutungsgrads auswählt;
- wobei das Remote-System (SR) während des jeweiligen Auswahlschritts (RS) als eine Funktion des jeweiligen Bedeutungsgrads mindestens ein jeweiliges Zeitfenster auswählt, mit dem das jeweilige weitere Datenpaket (UP) korreliert sein muss;
- wobei das Remote-System (SR) während des jeweiligen Auswahlschritts (RS) als eine Funktion des jeweiligen Bedeutungsgrads mindestens einen jeweiligen Sensor auswählt, mit dem das jeweilige weitere Datenpaket (UP) korreliert sein muss.

3. Automatisches Überwachungsverfahren nach Anspruch 2, wobei das Remote-System (SR) während des jeweiligen Auswahlschritts (RS) das mindestens eine jeweilige Zeitfenster auswählt, mit dem das jeweilige weitere Datenpaket (UP) korreliert sein muss, sodass das mindestens eine jeweilige ausgewählte Zeitfenster als eine Funktion des jeweiligen Bedeutungsgrads anders ist als das Zeitfenster, mit dem das jeweilige übertragene Datenpaket (P) korreliert ist, oder diesem gleicht.

4. Automatisches Überwachungsverfahren nach Anspruch 2 oder 3, wobei das Remote-System (SR) während des jeweiligen Auswahlschritts (RS) den mindestens einen jeweiligen Sensor auswählt, mit dem das jeweilige weitere Datenpaket (UP) korreliert sein muss, sodass der jeweilige mindestens eine ausgewählte Sensor als eine Funktion des jeweiligen Bedeutungsgrads entweder ein Sensor sein kann, der sich von dem einen oder mehreren Sensoren, mit denen das jeweilige übertragene Datenpaket (P) korreliert ist, unterscheidet, oder ein Sensor, der der gleiche Sensor wie einer des einen oder der mehreren Sensoren ist, mit denen das jeweilige übertragene Datenpaket (P) korreliert ist.

## Revendications

1. Appareil de surveillance automatique (1) pour surveiller automatiquement un véhicule routier, comprenant :
- un système local de mesure et de traitement (SL) configuré pour fonctionner à bord du véhicule pendant que le véhicule se déplace, le système local (SL) comprenant un groupe de capteurs (S1, S2, S3, S4) pour prendre des relevés corrélés au mouvement ;
- un système de traitement distant (SR) ;
dans lequel :
- le système local (SL) est configuré pour obtenir des données (d1, d2, d3, d4) indicatives de ces relevés et pour traiter au moins une partie des données (d1, d2, d3, d4) afin de déterminer si un événement potentiellement significatif s'est produit sur le véhicule ;
dans lequel le système local (SL) est configuré de telle sorte que :
- le système local (SL) exécute une étape d'obtention (O), au cours de laquelle il obtient une pluralité de paquets de données (P, UP), chacun de ces paquets de données étant corrélé à un ou plusieurs des capteurs respectifs et à une fenêtre temporelle respective, dans le sens où chacun de ces paquets de données comprend les données qui sont indicatives des relevés pris par un ou plusieurs capteurs respectifs pendant la fenêtre temporelle respective ;
dans lequel le système local (SL) est configuré de telle sorte que :
- le système local (SL) exécute une étape de traitement (E), pendant laquelle le système local (SL) traite au moins un paquet de données (P) de la pluralité de paquets de données ;
- le système local (SL) exécute une étape de détermination (D), au cours de laquelle le système local (SL) détermine, en fonction de l'étape de traitement (E), si un événement potentiellement significatif s'est produit sur le véhicule ;
- si l'étape de détermination (D) a pour résultat de déterminer que l'événement potentiellement significatif s'est produit, le système local (SL) est configuré pour exécuter une étape de transfert (T) du paquet de données traitées (P) du système local (SL) au système distant (SR) ;
**caractérisé en ce que** :
- le système distant (SR) est configuré pour traiter l'au moins une partie (P) des données, de manière à déterminer un degré d'importance effective de l'événement ;
- le système distant (SR) est configuré de telle sorte que, en fonction de ce degré d'importance, le système distant (SR) peut demander au système local d'envoyer une partie supplémentaire (UP) des données, cette partie supplémentaire s'ajoutant à celle sur la base de laquelle le système local (SL) a déterminé que l'événement potentiellement significatif s'est produit ;
- le système local (SL) est configuré de manière à ce que, suite à la demande faite par le système distant (SR) au système local (SL), il transfère la partie supplémentaire des données du système local (SL) au système distant (SR) ;
- le système distant (SR) est configuré pour sélectionner la partie supplémentaire (UP) des données à demander au système local (SL) en fonction de ce degré d'importance ;
- le système distant (SR) est configuré pour exécuter une étape respective de traitement (RE), pendant laquelle le système distant (SR) traite le paquet de données transféré (P) respectif ;
- le système distant (SR) est configuré pour exécuter une étape respective de détermination (RD), pendant laquelle le système distant détermine, en fonction de l'étape respective de traitement (RE), un degré respectif d'importance de l'événement spécifique qui s'est produit sur le véhicule et auquel le paquet de données transféré respectif est associé ;
- le système distant (SR) est configuré pour exécuter une étape respective de demande (RR), au cours de laquelle le système distant (SR), en fonction du degré d'importance respectif, demande au système local (SL) d'envoyer au système distant (SR) un paquet supplémentaire de données (UP) respectif de la pluralité de paquets de données (P, UP), le paquet supplémentaire de données (UP) respectif étant associé au même événement spécifique ;
- le système local (SL) est configuré pour exécuter une étape respective de transfert (RT) du paquet de données supplémentaire (UP) respectif du système local (SL) au système distant (SR) ;
- le système distant (SR) est configuré de telle sorte que le système distant (SR) exécute une étape respective de sélection (RS), au cours de laquelle le système distant (SR) sélectionne, en fonction du degré d'importance respectif, le paquet de données supplémentaire (UP) respectif à demander au système local (SL) au cours de l'étape respective de demande (RR) ;
- le système distant (SR) est configuré de telle sorte que, pendant l'étape respective de sélection (RS), le système distant (SR) sélectionne, en fonction du degré d'importance respectif, au moins une fenêtre temporelle respective avec laquelle le paquet de données supplémentaire (UP) respectif doit être corrélé ;
- le système distant (SR) est configuré de telle sorte que pendant l'étape respective de sélection (RS), le système distant (SR) sélectionne, en fonction du degré d'importance respectif, au moins un capteur respectif avec lequel le paquet de données supplémentaire (UP) respectif doit être corrélé.

2. Procédé de surveillance automatique d'un véhicule routier, comprenant :
- prendre des relevés corrélés au mouvement du véhicule au moyen d'un système local de mesure et de traitement (SL) fonctionnant à bord du véhicule pendant que le véhicule se déplace et comprenant un groupe de capteurs (S1, S2, S3, S4) ;
- obtenir, par l'intermédiaire du système local (SL), des données (d1, d2, d3, d4) indicatives de ces relevés ;
- traiter au moins une partie (P) des données par l'intermédiaire du système local (SL), de manière à déterminer si un événement potentiellement significatif s'est produit sur le véhicule ;
- si l'événement potentiellement significatif a été déterminé comme ayant eu lieu, transférer cette partie (P) des données du système local (SL) au système de traitement distant ;
- une étape d'obtention (O), au cours de laquelle un système local (SL) obtient une pluralité de paquets de données (P, UP), chacun de ces paquets de données étant corrélé à un ou plusieurs capteurs respectifs et à une fenêtre temporelle respective, dans le sens où chacun de ces paquets de données comprend les données étant indicatives des relevés pris par un ou plusieurs capteurs respectifs pendant la fenêtre temporelle respective ;
- une étape de traitement (E), pendant laquelle le système local (SL) traite au moins un paquet de données (P) de la pluralité de paquets de données ;
- une étape de détermination (D), au cours de laquelle le système local (SL) détermine, en fonction de l'étape de traitement (E), si un événement potentiellement significatif s'est produit sur le véhicule ;
- si l'étape de détermination (D) aboutit à déterminer que l'événement potentiellement significatif s'est produit, une étape de transfert (T), au cours de laquelle le paquet de données traité (P) est transféré du système local (SL) à un système distant (SR) ;
**caractérisé en ce que** le procédé comprend :
- traiter, par l'intermédiaire du système distant (SR), la partie (P) des données, de manière à déterminer un degré d'importance de l'événement ;
- demander au système local (SL), par l'intermédiaire du système distant (SR) et en fonction de ce degré d'importance, d'envoyer une partie supplémentaire (UP) des données, cette partie supplémentaire s'ajoutant à la partie sur la base de laquelle le système local (SL) a déterminé que l'événement potentiellement significatif s'est produit ;
- transférer la partie supplémentaire (UP) des données du système local (SL) au système distant (SR) ;
- une étape consistant à sélectionner, au moyen du système distant (SR) et en fonction de ce degré d'importance, la partie supplémentaire (UP) des données à demander au système local (SL) ;
pour chaque paquet de données (P) transféré du système local (SL) au système distant (SR), ledit paquet transféré étant associé à l'événement potentiellement significatif, le procédé comprend une séquence opérationnelle respective, la séquence opérationnelle respective comprenant :
- une étape respective de traitement (RE), pendant laquelle le système distant (SR) traite le paquet de données transféré (P) respectif ;
- une étape respective de détermination (RD), pendant laquelle le système distant (SR) détermine, en fonction de l'étape respective de traitement (RE) effectuée par le système distant (SR), un degré respectif d'importance de l'événement spécifique qui s'est produit sur le véhicule et auquel est associé le paquet de données transféré respectif ;
- une étape respective de demande (RR), pendant laquelle le système distant (SR), en fonction du degré d'importance respectif, demande au système local (SL) d'envoyer au système distant (SR) un paquet supplémentaire de données (UP) respectif de la pluralité de paquets de données, le paquet supplémentaire de données (UP) respectif étant associé au même événement spécifique ;
- une étape respective de transfert (RT), pendant laquelle le paquet de données supplémentaire (UP) respectif est transféré du système local (SL) au système distant (SR) ;
la séquence de fonctionnement respective comprend une étape respective de sélection (RS), pendant laquelle le système distant (SR), en fonction du degré d'importance respectif, sélectionne le paquet de données supplémentaire (UP) respectif à demander au système local (SL) pendant l'étape respective de demande (RR) ;
- pendant l'étape respective de sélection (RS), le système distant (SR) sélectionne, en fonction du degré d'importance respectif, au moins une fenêtre temporelle respective avec laquelle le paquet de données supplémentaire (UP) respectif doit être corrélé ;
- pendant l'étape respective de sélection (RS), le système distant (SR) sélectionne, en fonction du degré d'importance respectif, au moins un capteur respectif avec lequel le paquet de données supplémentaire (UP) respectif doit être corrélé.

3. Procédé de surveillance automatique selon la revendication 2, dans lequel, pendant l'étape respective de sélection (RS), le système distant (SR) sélectionne l'au moins une fenêtre temporelle respective avec laquelle ce paquet de données supplémentaire (UP) respectif doit être corrélé, de sorte que, en fonction de ce degré d'importance respectif, l'au moins une fenêtre temporelle sélectionnée respective peut être différente de, ou identique à, la fenêtre temporelle avec laquelle le paquet de données transféré (P) respectif est corrélé.

4. Procédé de surveillance automatique selon la revendication 2 ou 3, dans lequel, pendant l'étape respective de sélection (RS), le système distant (SR) sélectionne l'au moins un capteur respectif avec lequel ce paquet de données supplémentaire (UP) respectif doit être corrélé, de sorte que, en fonction de ce degré d'importance respectif, cet au moins un capteur sélectionné respectif peut être soit un capteur étant différent de l'un ou plusieurs des capteurs avec lesquels le paquet de données transféré respectif (P) est corrélé, soit un capteur étant le même qu'un capteur de l'un ou plusieurs des capteurs avec lesquels le paquet de données transféré (P) respectif est corrélé.
